(19) Europäisches Patentamt
European Patent Office
Office européen des brevets

(11) **EP 4 625 091 A1**

(12) **EUROPEAN PATENT APPLICATION**

(43) Date of publication:
**01.10.2025 Bulletin 2025/40**

(21) Application number: 24166006.7

(22) Date of filing: **25.03.2024**

(51) International Patent Classification (IPC):
*G05D 23/19* (2006.01)

(52) Cooperative Patent Classification (CPC):
**G05D 23/1919**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicants:
• **Mitsubishi Electric R&D Centre Europe B.V.**
**Livingston EH54 5DJ (GB)**
Designated Contracting States:
**GB**

• **MITSUBISHI ELECTRIC CORPORATION**
**Chiyoda-ku**
**Tokyo 100-8310 (JP)**
Designated Contracting States:
**AL AT BE BG CH CY CZ DE DK EE ES FI FR GR
HR HU IE IS IT LI LT LU LV MC ME MK MT NL NO
PL PT RO RS SE SI SK SM TR**

(72) Inventor: **WU, Duan**
**Livingston, EH54 5DJ (GB)**

(74) Representative: **Pfenning, Meinig & Partner mbB
Patent- und Rechtsanwälte
Theresienhöhe 11a
80339 München (DE)**

(54) **A METHOD FOR OPERATING A HEATING SYSTEM, AND HEATING SYSTEM**

(57) A method for operating a heating system comprising a hydronic heat pump and a heating system comprising a hydronic heat pump are provided. The method comprises defining a first mode of the heating system by setting a first flow temperature and a first deadband, and comprises defining a second mode of the heating system by setting a second flow temperature and a second deadband. The method further comprises switching the heating system from the first mode to the second mode based on a signal received by the controller. In the method, the flow temperature in the second mode is set higher than the flow temperature in the first mode. Moreover, in the method, the second deadband is set broader than the first deadband by the controller. The heating system is configured accordingly. With the method and/or the heating system, an operation of the heating system with higher efficiency, especially during partial load conditions, is made possible.

Figure 1

EP 4 625 091 A1

**Description**

A method for operating a heating system comprising a hydronic heat pump and a heating system comprising a hydronic heat pump are provided. The method comprises defining a first mode of the heating system by setting a first flow temperature and a first deadband, and comprises defining a second mode of the heating system by setting a second flow temperature and a second deadband. The method further comprises switching the heating system from the first mode to the second mode based on a signal received by the controller. In the method, the flow temperature in the second mode is set higher than the flow temperature in the first mode. Moreover, in the method, the second deadband is set broader than the first deadband by the controller. The heating system is configured accordingly. With the method and/or the heating system, an operation of the heating system with higher efficiency, especially during partial load conditions, is made possible.

In nearly Zero Energy Houses (nZEH) or Buildings (nZEB), indoor heating may be provided by a heat pump system using a renewable energy source. The heat pump may use a refrigerant such as R290, R32, $CO_2$ or other type, and its principle of operation is known to persons skilled in the art.

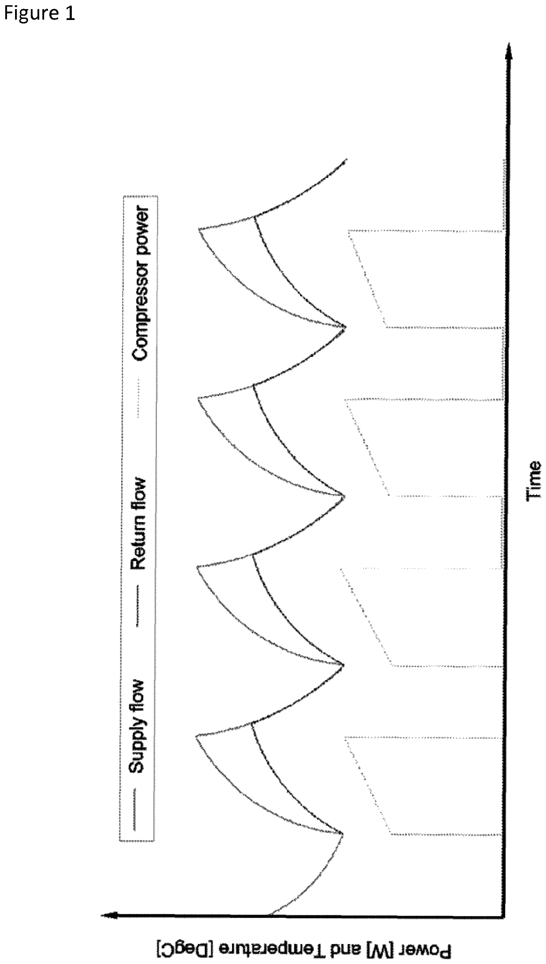

The selection of heat pump capacity is mainly based on a worst scenario, i.e., to meet a target indoor temperature when external ambient temperatures are usually coldest, e.g., during winter. However, for most of the time, external ambient temperatures will be higher than the coldest winter temperature, and the heat demand of the nZEH/nZEB will be lower than the full capacity of the heat pump. The heat pump will be operating in partial load conditions, cycling on and off frequently, leading to deteriorating efficiency, shortening system life and increasing electric consumption (i.e., increased electricity bills) (see e.g. Figure 1).

The efficiency of the heat pump operating under partial load conditions is low, and because it will be operating in such conditions for a majority of time, it will be necessary to operate the heat pump in such a way as to increase efficiency during partial load conditions.

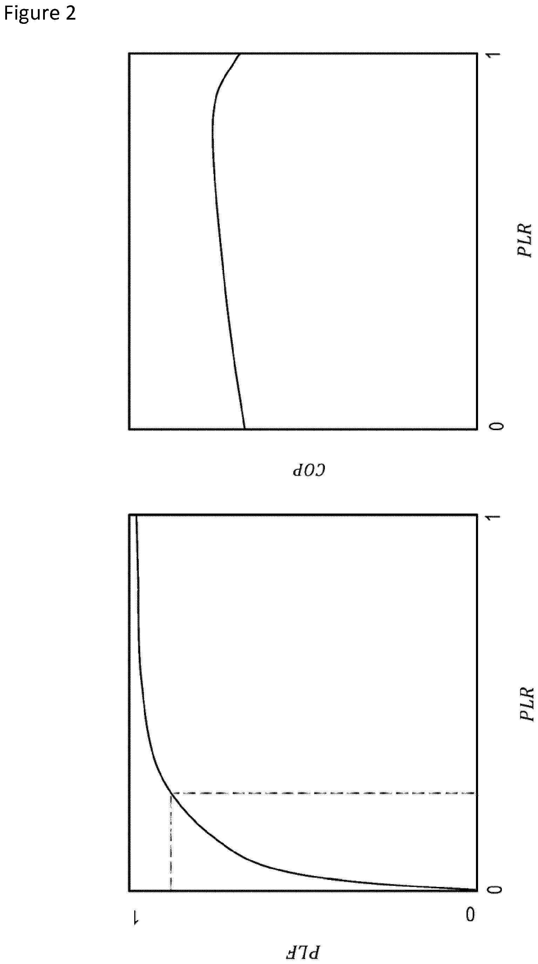

For example, it was found that, in heating systems of the prior art, when ambient temperature is above 7 °C, the heat pump operates at less than 40% of its full capacity 48% of the time. There is also an increasing degradation in heat pump energy efficiency as the partial load ratio decreases (see e.g. Figure 2).

US 2023/318296 A1 discloses an energy management system for a building, comprising at least one heat pump, at least one first thermal energy storage device for providing domestic hot water, at least one second thermal energy storage device for providing space heating, at least one renewable energy generation device, at least one first state of charge analyser for determining the state of charge of the at least one first thermal energy storage device, at least one second state of charge analyser for determining the state of charge of the at least one second thermal energy storage device, and a controller. The controller is configured to control, in dependence on at least the state of charge of the at least one first thermal energy storage device and/or the state of charge of the at least one second thermal energy storage device, whether one of and which of the at least one first thermal energy storage device and the at least one second thermal energy storage device is charged with energy provided by (a heat pump operation of) the at least one heat pump and/or energy provided by the at least one renewable energy generation device.

Starting from the above, it was the objective of the present invention to provide a method for operating a heating system and a heating system which overcomes at least one disadvantage of the prior art. Preferably, the provided method should allow operating a heating system with a higher efficiency (especially over long periods of time), a longer period of time without damage to the heat pump and/or a lower consumption of electrical energy. The provided system should be capable of being operated with a higher efficiency (especially over long periods of time), a longer period of time without damage to the heat pump and/or a lower consumption of electrical energy.

The objective is solved by the method having the features of claim 1 and the heating system having the features of claim 9. The dependent claims show advantageous embodiments.

According to the invention, a method for operating a heating system which comprises a hydronic heat pump and a controller is provided, the method comprising the following steps:

a) setting a first flow temperature and a first deadband by the controller to define a first operation mode of the heating system, wherein the first flow temperature and the first deadband are suitable for heating a space to a target temperature set within the first deadband, wherein the first deadband is defined by a first lower limit being a temperature less than or equal to a target temperature and a first upper limit being a temperature greater than or equal to the target temperature,

b) setting a second flow temperature and a second deadband by the controller to define a second operation mode of the heating system, wherein the second flow temperature and the second deadband are suitable for heating a space to a target temperature set within the second deadband, wherein the second deadband is defined by a second lower limit being a temperature less than or equal to a target temperature and a second upper limit being a temperature greater than or equal to the target temperature,

c) switching the heating system from the first operation mode to the second operation mode and from the second operation mode to the first operation mode by the controller,

characterized in that
the second flow temperature of the second operation mode is set higher than the first flow temperature of the first operation mode by the controller and the second deadband is set broader than the first deadband by the controller.

According to the invention, setting the second deadband broader than the first deadband is preferably increasing a temperature difference ($\Delta T$) between a lower limit of the second deadband to an upper limit of the second deadband compared to a temperature difference between the lower limit of the first deadband to an upper limit of the first deadband i.e. preferably increasing the $\Delta T$ of the second deadband compared to a $\Delta T$ of the first deadband.

In the method, the system can be operated in the first operation mode or in the second operation mode by the controller.

The method according to the invention allows operating a heating system with a higher efficiency (especially over long periods of time), a longer period of time without damage to the heat pump and/or a lower consumption of electrical energy.

In the method according to the invention, the lower limit of the second deadband of the second operation mode can be set lower than the lower limit of the first deadband of the first operation mode by the controller and the upper limit of the second deadband of the second operation mode can be set (or maintained) identical to the upper limit of the first deadband of the first operation mode by the controller. This effectuates a broadening of the second deadband compared to the first deadband in the direction of a lower temperature region.

Moreover, in the method according to the invention, the upper limit of the second deadband of the second operation mode can be set higher than the upper limit of the first deadband of the first operation mode by the controller and the lower limit of the second deadband of the second operation mode can be set (or maintained) identical to the lower limit of the first deadband of the first operation mode by the controller. This effectuates a broadening of the second deadband compared to the first deadband in the direction of a higher temperature region.

Furthermore, in the method according to the invention, the lower limit of the second deadband of the second operation mode can be set lower than the lower limit of the first deadband of the first operation mode by the controller and the upper limit of the second deadband of the second operation mode can be set higher than the upper limit of the first deadband of the first operation mode by the controller. This effectuates a broadening of the second deadband compared to the first deadband both in the direction of a lower temperature region and in the direction of a higher temperature region.

In the method, for setting the second deadband broader than the first deadband, the lower limit of the second deadband of the second operation mode can be set lower than the lower limit of the first deadband of the first operation mode by a first predetermined value, wherein the first predetermined value is preferably not higher than a value (i.e. equal to or lower than a value) which is defined by a preferred occupant thermal comfort level, wherein said value is more preferably >0 K to ≤3 K. This has the advantage that a thermal comfort level of an occupant of the space to be heated is not compromised even during an operation of the system in the second operation mode.

Moreover, in the method, for setting the second deadband broader than the first deadband, the upper limit of the second deadband of the second operation mode can be set higher than the upper limit of the first deadband of the first operation mode by a second predetermined value, wherein the second predetermined value is preferably not higher than a value (i.e. equal to or lower than a value) which is defined by a preferred occupant thermal comfort level, wherein said value is more preferably >0 K to ≤3 K. This has the advantage that a thermal comfort level of an occupant of the space to be heated is not compromised even during an operation of the system in the second operation mode.

The first and second predetermined value are optionally identical or different.

Furthermore, in the method, the second flow temperature can be set based on a heat demand of the space, wherein the second flow temperature is preferably set by using the following equation:

$$T_{w,sp2} = T_{w,sp1} + [(Q_{nom,HP} - Q_{demand}) : (Q_{HP} : (T_{w,avg} - T_{indoor}))]$$

wherein

$T_{w,sp2}$: second flow temperature setpoint [K],
$T_{w,sp1}$: first flow temperature setpoint [K],
$Q_{nom,HP}$: nominal heat capacity of the heat pump [W],
$Q_{demand}$: heat demand of the space [W],
$Q_{HP}$: heating capacity of the heat pump [W],
$T_{w,avg}$: average flow temperature [K],
$T_{indoor}$: indoor temperature (i.e. temperature of the space) [K].

The advantage is that the second temperature of the second operation mode is increased by a defined value above the first temperature of the first operation mode, wherein the defined value is dependent on the characteristics of the heat pump of the system, the heat demand, the indoor temperature (i.e. the temperature of the space) and the average water temperature in a circuit of the heat pump. The average water temperature can be calculated as follows:

$$T_{w,avg} = \left(T_{w,supply} + T_{w,return}\right) : 2$$

wherein

$T_{w,avg}$:    average flow temperature [K];
$T_{w,supply}$:    flow supply temperature (water flow supplied by heat pump) [K];
$T_{w,return}$:    flow return temperature (water flow returning to heat pump) [K].

Besides, in the method, the heating system can be switched from the first operation mode to the second operation mode when a partial load ratio of the hydronic heat pump is less than 60%, more preferably less than 50%. It has been found that the switching to the second operation mode at a partial load ratio in these ranges (especially the range of less than 50%) is beneficial for increasing the efficiency of the operation of the heating system, for prolonging the operation of the heating system without damage to the heat pump and for lowering the consumption of electrical energy by the heating system.

In the method, the heating system can be switched from the first operation mode to the second operation mode when a correlation between a partial load factor of the hydronic heat pump and a partial load ratio of the hydronic heat pump is greater than 1. A switching to the second operation mode at a correlation in said range increases the efficiency of the operation of the heating system, prolongs the operation of the heating system without damage to the heat pump and lowers the consumption of electrical energy by the heating system.

Moreover, in the method, the heating system can be switched from the first operation mode to the second operation mode when the hydronic heat pump is operating in a region of its partial load efficiency curve which lies before an inflection point of said partial load efficiency curve, preferably when the hydronic heat pump is operating with

$$\delta PLF/\delta PLR > 1$$

wherein

PLF:    partial load factor of the hydronic heat pump [%],
PLR:    partial load ratio of the heat pump [%].

It has been found that, during this operation of the heat pump, it is beneficial to switch to the second operation mode to increase the efficiency of the operation of the heating system, to prolong the operation of the heating system without damage to the heat pump and to lower the consumption of electrical energy by the heating system.

In the method, the second deadband can be set broader than the first deadband by the controller when the following condition is met:

$$\left[\left(Q \cdot \left(T_{indoor,SP} - T_{amb}\right)\right) : \left(Q_{nom,HP} \cdot \Delta T\right)\right] \leq \alpha_{PLR,\,min}$$

wherein

Q:    heat input by heat pump or other sources [W],
$T_{indoor,SP}$:    indoor temperature setpoint of the space [K],
$T_{amb}$:    ambient outdoor temperature [K],
$Q_{nom,HP}$:    nominal heat capacity of the heat pump [W],
$\Delta T$:    difference of indoor space temperature and ambient outdoor temperature [K],
$\alpha_{PLR,\,min}$:    minimum threshold value for a ratio of the heat capacity [%].

In the method, the initial value of the ratio of the heat capacity $\alpha$ can be estimated (calculated) as follows:

$$\alpha = Q \, / \, Q_{nom,HP}$$

wherein

α: ratio of the heat capacity [%],
Q: heat input by heat pump or other sources [W],
$Q_{nom,HP}$: nominal heat capacity of the heat pump [W].

Furthermore, this method allows to set the second flow temperature of the second operation mode as well as the lower and/or upper limit of the second deadband of the second operation mode in dependence of an indoor temperature setpoint of the space (i.e. a desired temperature of the space to be heated), heat input by heat pump or other sources, a given outdoor temperature and a minimum threshold value for a ratio of the heat capacity. Then the ratio of the heat capacity α can be calculated as follows:

$$\alpha = [(Q \cdot (T_{indoor,SP} - T_{amb})) : (Q_{nom,HP} \cdot \Delta T)]$$

or

$$\alpha = Q / Q_{nom,HP} \cdot (T_{indoor,SP} - T_{amb}) / \Delta T$$

wherein

α: ratio of the heat capacity [%],
Q: heat input by heat pump or other sources [W],
$Q_{nom,HP}$: nominal heat capacity of the heat pump [W],
$T_{indoor,SP}$: indoor temperature setpoint of the space [K],
$T_{amb}$: ambient outdoor temperature [K],
$\Delta T$: difference of indoor space temperature and ambient outdoor temperature [K].

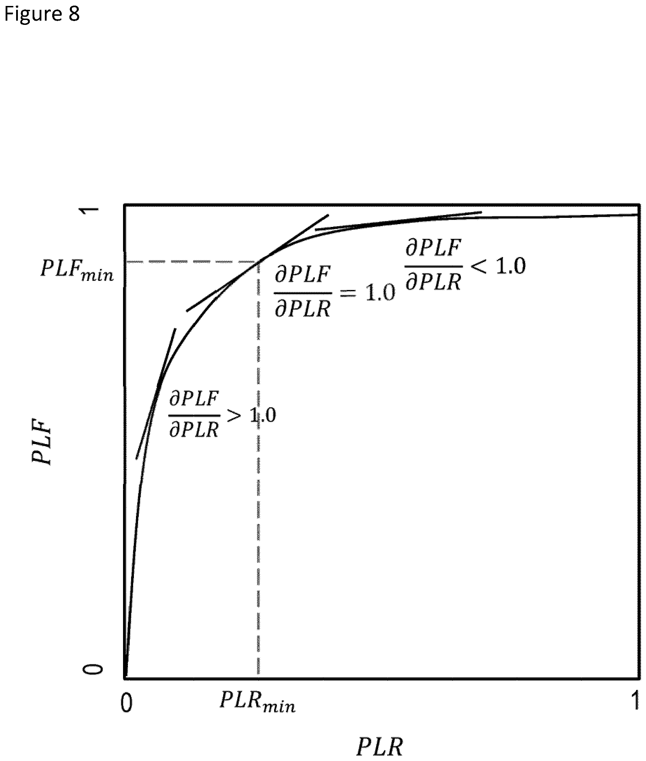

According to a preferred embodiment of the invention, the minimum threshold value for the ratio of the heat capacity, i.e. $\alpha_{PLR,\,min}$, is the α value for the case in which $\delta_{PLF} : \delta_{PLR} = 1.0$. Details can be found in Example 3 and Figure 8. For example, $\alpha_{PLR,\,min}$ can be 30% (or: 0,3).

A setting of the second flow temperature as described above increases the efficiency of the operation of the heating system, prolongs the operation of the heating system without damage to the heat pump and lowers the consumption of electrical energy by the heating system.

In the method, the heating system can be switched from the first operation mode to the second operation mode when a demand for heating the space is reduced. This improves the efficiency of the operation of the heating system.

Moreover, in the method, the heating system can be switched from the second operation mode to the first operation mode when demand for heating the space is increased. This ensures that the space to be heated can be heated with maximum efficiency, i.e. as fast as possible.

In the method, the heating system can be switched from the first operation mode to the second operation mode when a number of occupants in the space to be heated is equal to or below a threshold number of occupants, wherein the threshold number is preferably 0. This has the advantage that the system only allows the space to be heated with high flow temperatures and within a broader deadband if there is no occupant (e.g. no person) in the room. This prevents that the space becomes thermally uncomfortable for an occupant.

Furthermore, in the method, the heating system can be switched from the second operation mode to the first operation mode when a number of occupants in the space to be heated is above a threshold number of occupants, wherein the threshold number is preferably 0. The advantage is that the system no longer heats the space with high flow temperatures and within a broader deadband if an occupant (e.g. a person) is present in the room. This ensures that the temperature of the room is rapidly established to be within a deadband desired by an occupant of the room (= first deadband).

According to the invention, a heating system is provided, the heating system comprising

a hydronic heat pump; and
a controller;
wherein the controller is configured to set a first flow temperature and a first deadband to define a first operation mode of the heating system, wherein the first flow temperature and the first deadband are suitable for heating a space to a target temperature set within the first deadband, wherein the first deadband is defined by a first lower limit being a temperature less than or equal to a target temperature and a first upper limit being a temperature greater than or equal to the target temperature;

wherein the controller is configured to set a second flow temperature and a second deadband to define a second operation mode of the heating system, wherein the second flow temperature and the second deadband are suitable for heating a space to a target temperature set within the second deadband, wherein the second deadband is defined by a second lower limit being a temperature less than or equal to a target temperature and a second upper limit being a temperature greater than or equal to the target temperature;

wherein the controller is configured to switch the heating system from the first operation mode to the second operation mode and from the second operation mode to the first operation mode,

characterized in that the controller is configured to set

the second flow temperature of the second operation mode higher than the first flow temperature of the first operation mode, and

the second deadband broader than the first deadband.

According to the invention, the configuration of the controller to set the second deadband broader than the first deadband is preferably a configuration of the controller to increase a temperature difference between a lower limit of the second deadband to an upper limit of the second deadband compared to a temperature difference between the lower limit of the first deadband to an upper limit of the first deadband i.e. preferably a configuration of the controller to increase the $\Delta T$ of the second deadband compared to a $\Delta T$ of the first deadband.

The controller can be configured to operate the system in the first operation mode or in the second operation mode.

The heating system according to the invention is capable of operating with a higher efficiency (especially over long periods of time), a longer period of time without damage to the heat pump and/or a lower consumption of electrical energy.

In the heating system according to the invention, the controller can be configured to set the lower limit of the second deadband of the second operation mode lower than the lower limit of the first deadband of the first operation mode and to set (or maintain) the upper limit of the second deadband of the second operation mode identical to the upper limit of the first deadband of the first operation mode. This effectuates a broadening of the second deadband compared to the first deadband in the direction of a lower temperature region.

Moreover, in the method according to the invention, the controller can be configured to set the upper limit of the second deadband of the second operation mode higher than the upper limit of the first deadband of the first operation mode and to set (or maintain) the lower limit of the second deadband of the second operation mode identical to the lower limit of the first deadband of the first operation mode. This effectuates a broadening of the second deadband compared to the first deadband in the direction of a higher temperature region.

Furthermore, in the method according to the invention, the controller can be configured to set the lower limit of the second deadband of the second operation mode lower than the lower limit of the first deadband of the first operation mode and to set the upper limit of the second deadband of the second operation mode higher than the upper limit of the first deadband of the first operation mode. This effectuates a broadening of the second deadband compared to the first deadband both in the direction of a lower temperature region and in the direction of a higher temperature region.

The controller can be configured to, for setting the second deadband broader than the first deadband, set the lower limit of the second deadband of the second operation mode lower than the lower limit of the first deadband of the first operation mode by a first predetermined value, wherein the first predetermined value is preferably not higher than a value (i.e. equal to or lower than a value) which is defined by a preferred occupant thermal comfort level, wherein said value is more preferably >0 K to <_3 K.

Moreover, the controller can be configured to, for setting the second deadband broader than the first deadband, set the upper limit of the second deadband of the second operation mode higher than the upper limit of the first deadband of the first operation mode by a second predetermined value, wherein the second predetermined value is preferably not higher than a value (i.e. equal to or lower than a value) which is defined by a preferred occupant thermal comfort level, wherein said value is more preferably >0 K to $\leq$3 K.

The first and second predetermined value are optionally identical or different.

Moreover, the controller can be configured to set the second flow temperature based on a heat demand of the space, wherein the controller is preferably configured to set the second flow temperature by using the following equation:

$$T_{w,sp2} = T_{w,sp1} + [(Q_{nom,HP} - Q_{demand}) : (Q_{HP} : (T_{w,avg} - T_{indoor}))]$$

wherein

$T_{w,sp2}$:     second flow temperature setpoint [K],

EP 4 625 091 A1

$T_{w,sp1}$: first flow temperature setpoint [K],
$Q_{nom,HP}$: nominal heat capacity of the heat pump [W],
$Q_{demand}$: heat demand of the space [W],
$Q_{HP}$: heating capacity of the heat pump [W],
$T_{w,avg}$: average flow temperature [K],
$T_{indoor}$: indoor temperature [K].

Furthermore, the controller can be configured to switch the heating system from the first operation mode to the second operation mode when a partial load ratio of the hydronic heat pump is less than 60%, more preferably less than 50%.

The controller can be configured to switch the heating system from the first operation mode to the second operation mode when a correlation between a partial load factor of the hydronic heat pump and a partial load ratio of the hydronic heat pump is greater than 1.

Moreover, the controller can be configured to switch the heating system from the first operation mode to the second operation mode when the hydronic heat pump is operating in a region of its partial load efficiency curve which lies before an inflection point of said partial load efficiency curve, preferably when the hydronic heat pump is operating with

$$\delta PLF/\delta PLR > 1$$

wherein

PLF: partial load factor of the hydronic heat pump [%],
PLR: partial load ratio of the heat pump [%].

Apart from the above, the controller can be configured to set the second deadband broader than the first deadband when the following condition is met:

$$[(Q \cdot (T_{indoor,SP} - T_{amb})) : (Q_{nom,HP} \cdot \Delta T)] \leq \alpha_{PLR,\,min}$$

wherein

Q: heat input by heat pump or other sources [W],
$T_{indoor,SP}$: indoor temperature setpoint of the space [K],
$T_{amb}$: ambient outdoor temperature [K],
$Q_{nom,HP}$: nominal heat capacity of the heat pump [W],
$\Delta T$: differential temperature of indoor and outdoor [K],
$\alpha_{PLR,\,min}$: minimum threshold value for ratio of the heat capacity [%].

The controller can be configured to switch the heating system from the first operation mode to the second operation mode when a demand for heating the space is reduced.

Moreover, can be configured to switch the heating system the second operation mode to the first operation mode when demand for heating the space is increased.

The controller can be configured to switch the heating system from the first operation mode to the second operation mode when a number of occupants in the space to be heated is equal to or below a threshold number of occupants, wherein the threshold number is preferably 0.

Moreover, controller can be configured to switch the heating system from the second operation mode to the first operation mode when a number of occupants in the space to be heated is above a threshold number of occupants, wherein the threshold number is preferably 0.

The method according to the invention can be carried out with the heating system according to the invention. For example, method steps mentioned in the context of the method according to the invention can be carried out by the controller of the heating system according to the invention (i.e. the controller can be configured to carry out at least one step of the method according to the invention).

With reference to the following Figures and Examples, the subject-matter according to the invention is intended to be explained in more detail without wishing to restrict said subject-matter to the specific embodiments shown here.

Figure 1 exemplarily shows fluctuations in the flow temperature in a heating system comprising a hydronic heat pump, wherein the fluctuations are caused by an on-off cycling operation of the hydronic heat pump.

Figure 2 exemplarily shows a partial load factor (PLF) of a hydronic heat pump in dependence of a partial load ratio of said hydronic heat pump (see left graph) and a coefficient of performance (COP) of said hydronic heat pump in dependence of the partial load ratio (PLR) of said hydronic heat pump (see right graph).

Figure 3 shows a comparison between an aspect of a method of the prior art for operating a heating system comprising a hydronic heat pump (see "Current" in Figure 3) and an aspect of the method according to the present invention for operating a heating system comprising a hydronic heat pump (see "Invention" in Figure 3).

Figure 4 shows an aspect of a method for operating a heating system according to the present invention.

Figure 5 shows a heat curve for setting the initial target flow temperature.

Figure 6 shows building thermal characteristic parameters which were obtained by a linear regression based on field test data.

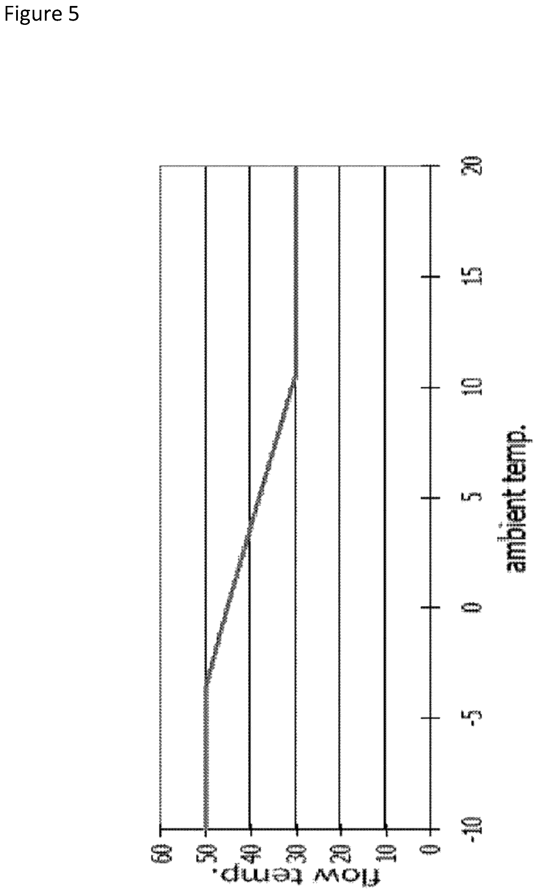

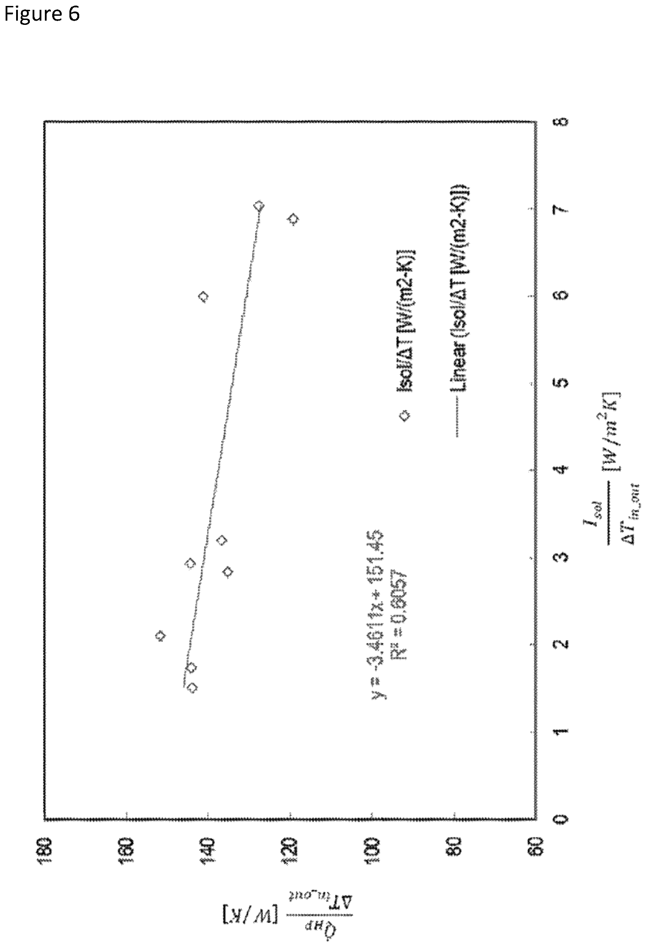

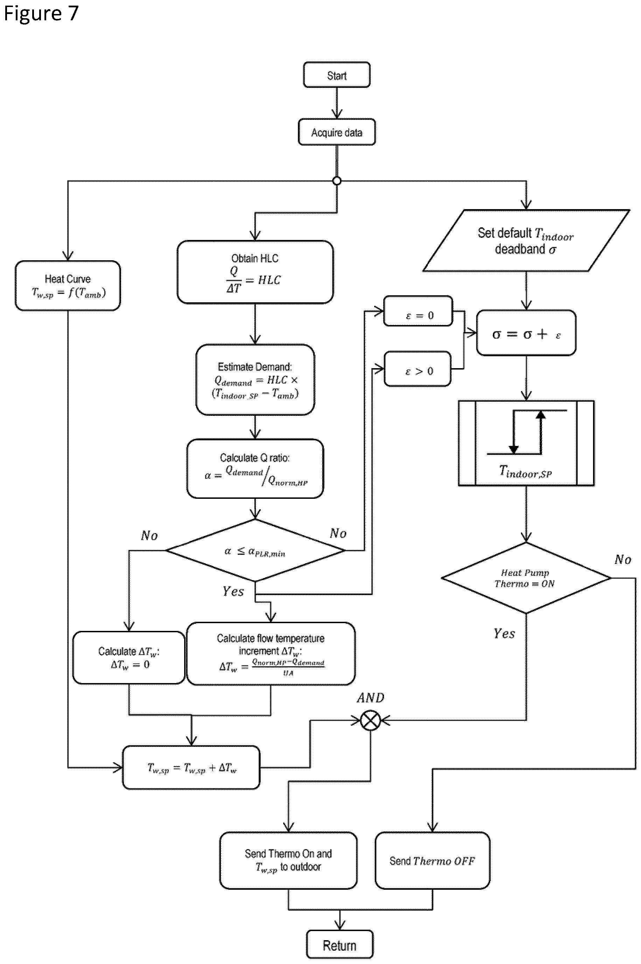

Figure 7 shows an aspect of a method according to the present invention, specifically a duty control algorithm flowchart. Data is collected and the heating system initially operates under default settings such as a default heat curve for flow temperature control (see Figure 5) and a default dead band. During operation, a heat demand is estimated through linear regression (see Figure 6). Then based on the heat load, the partial load ratio is calculated. Then, the value of the calculated partial load ratio is compared with a threshold value. If said value is smaller than the threshold value, a new flow temperature is calculated with increment and also the deadband of room temperature control is increased. Both new values for flow temperature and deadband are then used for controlling the heating system.

Figure 8 shows an aspect of a method according to the present invention, specifically a method for determining an inflection point of a partial load efficiency curve.

**Example 1** - **First aspects of the inventive method and heating system**

According to the understanding of the present invention, the partial load factor (PLF) is the ratio of the heat pump COP at part load and its COP at full load conditions and can be calculated as follows:

$$PLF = COP_{HP,partial} : COP_{HP, full}$$

PLF:           partial load factor [%],
$COP_{HP, partial}$:   coefficient of performance of heat pump during partial load [%],
$COP_{HP, full}$:    coefficient of performance of heat pump during full load [%].

There are also other means known to calculate PLF, but which are not according to the understanding of the present invention. These are e.g. the Italian standard UNI 10963 or the EN14825 standard.
For analyzing the efficiency deterioration during part load, PLF is plotted against the partial load ratio (PLR). The partial load ration can be calculated as follows:

$$PLR = Q_{HP, partial} : Q_{HP, full}$$

PLR:           partial load ratio [%],
$Q_{HP, partial}$:   heating load of heat pump during partial load [W],
$Q_{HP, full}$:    heating load of heat pump during full load [W].

For example, when the ambient temperature is above 7 °C, it can be observed that the hydronic heat pump operates at less than 40% of its full capacity for 48% of its operation time.
Moreover, it can be observed that the lower the partial load ratio (PLR) is, the lower is the energy efficiency (COP) of the hydronic heat pump (with an exception being a very high PLR, i.e. when the heating load of the heat pump comes close to its heating load during full load). This effect is illustrated in Figure 2, wherein the curve on the left can be referred to as a partial load efficiency curve and the curve on the right illustrates the COP depending on the PLR.

**Example 2 - Second aspects of the inventive method and heating system**

According to one aspect of the present invention, when the heat pump is operating under partial load conditions, the controller modulates the heat output and duty of the ON-period and OFF-period. During the ON-period, the heat output from heat pump is increased so that the heat pump operates at a higher COP. This is achieved by increasing the target temperature deadband. The main logic is shown below:

If PLR < $PLR_{threshold}$ (e.g. PLR is 50 %), then

> a) increase the heat pump flow temperature by $\Delta T$ (e.g. by 5°C) and thus increase PLR by a predetermined value 6 (e.g. 20%), and
> b) increase the target temperature deadband by a predetermined value $\varepsilon$ (e.g. by 0.5°C).

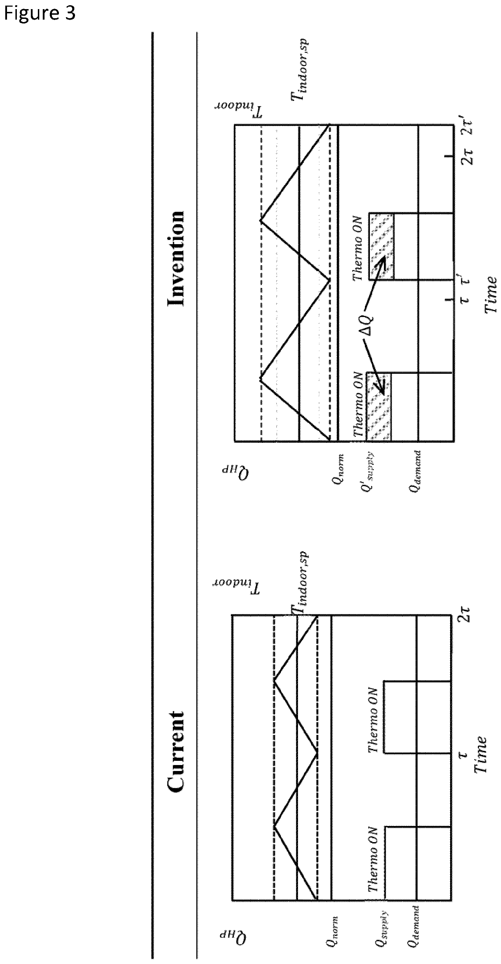

The effect of the COP increment is illustrated in Figure 3, which shows a comparison of a heat pump operation known in the prior art ("Current") with a heat pump operation according to the invention ("Invention").

**Example 3 - Third aspects of the inventive method and heating system**

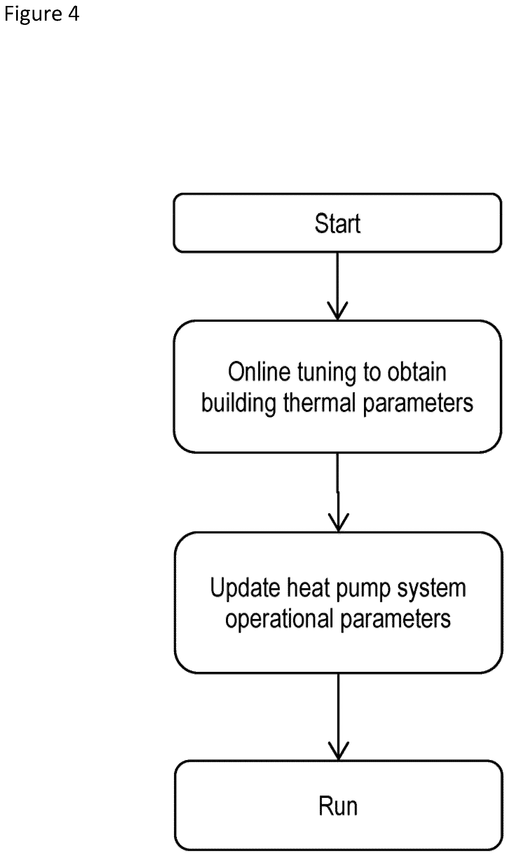

Figure 4 shows an aspect of the inventive method for operating a heating system which comprises a hydronic heat pump and a controller.

The heat loss coefficient (HLC) of a building is accounted mainly for the heat loss via fabric, windows and air infiltration.

The HLV can e.g. be obtained by equation below:

$$HLC = Q/\Delta T$$

wherein

HLC:    overall heat loss coefficient [W/K],
Q:       heat input by heat pump or other sources [W],
$\Delta T$:     differential temperature of indoor and outdoor [K].

If solar radiation data is available, a more sophisticated method (solar aperture method") can also be used to determine HLC (see Bauwens, G. & Roels, S., Energy and Buildings, vol. 82, pp. 163-172, 2014). In this method, co-heating tests are reviewed and linear regression techniques allow to determine both HLC and the parameter $A_{sol,*}$ with the following equation (assuming assuming $Q/\Delta T$ as independent variable and $I_{sol,*}/\Delta T$ as independent or explanatory variable:

$$HLC = Q/\Delta T + (A_{sol,*} \cdot I_{sol,*}/\Delta T)$$

wherein

HLC:    overall heat loss coefficient [W/K];
Q:       heat input by heat pump or other sources [W];
$\Delta T$:     differential temperature of indoor and outdoor [K];
$A_{sol,*}$:   overall solar aperture coefficient [m$^2$]; and
$I_{sol,*}$:   global solar radiation on * [W/m$^2$].

Figure 6 shows the linear regression results for obtaining both the HLC and the $A_{sol,*}$, which allows Building thermal characteristic parameters to be obtained by based on field test data.

Figure 7 shows a possible control flow chart. Data is collected and the system is initially operated under default settings such as a heat curve for flow temperature control with a default dead band. During operation, the heat demand is estimated through the linear regression as showed in Figure 6. Then, based on the heat load, the partial load ratio is calculated. The partial load ratio is then compared with a threshold value. If the determined value is smaller than the threshold value, a new flow temperature is calculated with increment, and also the dead band of the room temperature control is increased. Both new values for flow temperature and deadband are then used for the control.

The heat curve equation $T_{w,sp} = f(T_{amb})$, as shown in Figure 7, is explained below:

The system operates based on a default heat curve and after obtaining enough data (e.g. in a period of one month), the system uses the linear regression to estimate a heat loss coefficient and also solar aperture coefficient as explained above. Then, the demand can be estimated based on the heat loss coefficient (HLC) and calculated as below:

$$Q_{demand} = HLC \cdot (T_{indoor,SP} - T_{amb})$$

wherein

$Q_{demand}$:  heat demand of the space [W],
HLC:  overall heat loss coefficient [W/K],
$T_{indoor,SP}$:  indoor temperature setpoint of the space [K],
$T_{amb}$:  ambient outdoor temperature [K].

Then, the ratio of the heat capacity $\alpha$ can be calculated as below:

$$\alpha = Q_{demand} : Q_{nom,HP}$$

wherein

$\alpha$:  ratio of the heat capacity [%],
$Q_{demand}$:  heat demand of the space [W],
$Q_{nom,HP}$:  nominal heat capacity of the heat pump [W].

Then the control algorithm decides if $\alpha$ is less or equal than a minimum threshold $\alpha_{PLR,min}$ (e.g. 0,3).
If $\alpha$ is above a minimum threshold $\alpha_{PLR,min}$, the target flow temperature uses a default value per heat curve (or PI if available).
If $\alpha$ is equal to or below a minimum threshold $\alpha_{PLR,min}$, a flow temperature increment is calculated.
The flow temperature increment can be calculated as indicated below:

$$\Delta T_w = (Q_{nom,HP} - Q_{demand}) : UA$$

wherein

$\Delta T_w$:  flow temperature increment [K],
$Q_{nom,HP}$:  nominal heat capacity of the heat pump [W],
$Q_{demand}$:  heat demand of the space [W],
UA:  overall heat transfer coefficient for the heating emitters (e.g. a radiator and a fan coil unit) [W/K].

UA can be expressed as follows:

$$UA = Q_{HP} : (T_{w,avg} - T_{indoor})$$

wherein

UA:  overall heat transfer coefficient for the heating emitters (e.g. a radiator and a fan coil unit) [W/K];
$Q_{HP}$:  heat capacity of the heat pump [W];
$T_{w,avg}$:  average flow temperature [K];
$T_{indoor}$:  indoor temperature [K].

The average water temperature can be calculated by averaging water supply temperature and water return temperature:

$$T_{w,avg} = (T_{w,supply} + T_{w,return}) : 2$$

wherein

$T_{w,avg}$:  average flow temperature [K];

$T_{w,supply}$:   flow supply temperature [K];
$T_{w,return}$:   flow return temperature [K].

The deadband $\sigma$ for an indoor temperature of the indoor room temperature control can be re-evaluated if $\alpha$ is less than or equal to a minimum value by adding an pre-defined increment $\varepsilon$ (e.g. 1 °C):

$$\sigma_N = \sigma + \varepsilon$$

wherein

$\sigma_N$:   new deadband [K];
$\sigma$:   default deadband [K];
$\varepsilon$:   pre-defined temperature increment (e.g. 1 K)

Both new target flow temperature and deadband for room temperature control are sent to the heat pump and then the heat pump is continuously operated by iteration.
The default deadband $\sigma$ can be obtained in by using a PMV comfort prediction method to meet the ASHRAE standard 55-2020 (see: https://comfort.cbe.berkeley.edu/).
The pre-defined increment can be obtained using an adaptive method, which has a wider band then with the PMV comfort prediction method. Both methods meet the ASHRAE Standard 55-2020.
$\alpha_{PLR,min}$ is important for the control to start the implementation of partial load high COP operation and can be determined with the following method:
Finding the operation point (turning point) when $\delta_{PLF} : \delta_{PLR} = 1.0$ either from data available from the heat pump specification or from field tests and operational data. This operation point is the COP optimal point in which the COP reduction due to the load reduction is equal.
If $\delta_{PLF} : \delta_{PLR} > 1$, COP reduction becomes significant when partial load reduces.
If $\delta_{PLF} : \delta_{PLR} < 1$, COP reduction rate is slower than the heat load reduction.
A method to find the operation point (turning point) when $\delta_{PLF} : \delta_{PLR} = 1.0$ is illustrated in Figure 8.
List of abbreviations and reference signs

| | |
|---|---|
| PLF: | partial load factor; |
| PLR: | partial load ratio; |
| HLC: | overall heat loss coefficient; |
| COP: | coefficient of performance; |
| COP': | further coefficient of performance; |
| $COP_{HP, partial}$: | coefficient of performance of heat pump during partial load; |
| $COP_{HP, full}$: | coefficient of performance of heat pump during full load; |
| Q: | heat input by the heat pump or other sources; |
| $Q_{HP}$: | heat capacity of the heat pump; |
| $Q_{nom}$: | nominal heat capacity; |
| $Q_{nom,HP}$: | nominal heat capacity of the heat pump; |
| $Q_{supply}$: | heat supply by the heat pump; |
| $Q'_{supply}$: | further heat supply by the heat pump; |
| $Q_{demand}$: | heat demand of the space; |
| $Q_{HP, partial}$: | heating capacity of heat pump during partial load; |
| $Q_{HP, full}$: | heating capacity of heat pump during full load; |
| $\Delta Q$: | difference in heat input by the heat pump or other sources; |
| $T_{indoor}$: | indoor temperature; |
| $T_{indoor, sp}$: | indoor temperature setpoint of the space; |
| $T_{amb}$: | ambient outdoor temperature; |
| $T_{w,avg}$: | average flow temperature; |
| $T_{w,supply}$: | water supply temperature; |
| $T_{w,return}$: | water return temperature; |
| $T_{w, sp}$: | supply flow temperature setpoint; |
| $T_{w,sp1}$: | first flow temperature setpoint; |
| $T_{w,sp2}$: | second flow temperature setpoint; |
| $\Delta T$ or $\Delta T_{in\_out}$: | difference of indoor space temperature and ambient outdoor temperature; |
| $\Delta T_w$: | flow temperature increment; |

$\tau$: the period;
$\tau'$: the further period;
Thermo ON: heat pump is running and supplying heat to the space;
Duty: fraction of one period in which the heat pump system is running;
Duty': further fraction of one period in which the heat pump system is running;
$E_{HP}$: electric consumption of the heat pump;
ambient temp.: ambient temperature;
flow temp.: water flow temperature;
$I_{sol}$: global solar radiation;
$I_{sol,*}$: global solar radiation on *;
$A_{sol,*}$: overall solar aperture coefficient [$m^2$];
$f(T_{amb})$: heat curve equation to determine supply flow temperature, which is a function of ambient outdoor temperature;
$\alpha$: ratio of the heat capacity;
$\alpha_{PLR,min}$: minimum threshold value for $\alpha$;
6: predetermined value by which PLR is increased;
$\sigma_N$: new deadband;
$\sigma$: default deadband;
$\varepsilon$: predetermined value by which target temperature deadband is increased;
UA: overall heat transfer coefficient for the heating emitters.

**Claims**

1. A method for operating a heating system which comprises a hydronic heat pump and a controller, the method comprising the following steps:

   a) setting a first flow temperature and a first deadband by the controller to define a first operation mode of the heating system, wherein the first flow temperature and the first deadband are suitable for heating a space to a target temperature set within the first deadband, wherein the first deadband is defined by a first lower limit being a temperature less than or equal to a target temperature and a first upper limit being a temperature greater than or equal to the target temperature,
   b) setting a second flow temperature and a second deadband by the controller to define a second operation mode of the heating system, wherein the second flow temperature and the second deadband are suitable for heating a space to a target temperature set within the second deadband, wherein the second deadband is defined by a second lower limit being a temperature less than or equal to a target temperature and a second upper limit being a temperature greater than or equal to the target temperature,
   c) switching the heating system from the first operation mode to the second operation mode and from the second operation mode to the first operation mode by the controller,

   **characterized in that**

   the second flow temperature of the second operation mode is set higher than the first flow temperature of the first operation mode by the controller, and
   the second deadband is set broader than the first deadband by the controller.

2. The method according to the preceding claim, **characterized in that**, for setting the second deadband broader than the first deadband, the

   i) lower limit of the second deadband of the second operation mode is set lower than the lower limit of the first deadband of the first operation mode by a first predetermined value, wherein the first predetermined value is preferably not higher than a value which is defined by a preferred occupant thermal comfort level, wherein said value is more preferably >0 K to ≤3 K; and/or
   ii) the upper limit of the second deadband of the second operation mode is set higher than the upper limit of the first deadband of the first operation mode by a second predetermined value, wherein the second predetermined value is preferably not higher than a value which is defined by a preferred occupant thermal comfort level, wherein said value is more preferably >0 K to ≤3;

   wherein the first and second predetermined value are optionally identical or different.

3. The method according to any one of the preceding claims, **characterized in that** the second flow temperature is set based on a heat demand of the space, wherein the second flow temperature is preferably set by using the following equation:

$$T_{w,sp2} = T_{w,sp1} + [(Q_{nom,HP} - Q_{demand}) : (Q_{HP} : (T_{w,avg} - T_{indoor}))]$$

wherein

$T_{w,sp2}$: second flow temperature setpoint,
$T_{w,sp1}$: first flow temperature setpoint,
$Q_{nom,HP}$: nominal heat capacity of the heat pump,
$Q_{demand}$: heat demand of the space,
$Q_{HP}$: heating capacity of the heat pump,
$T_{w,avg}$: average flow temperature,
$T_{indoor}$: indoor temperature.

4. The method according to any one of the preceding claims, **characterized in that** the heating system is switched from the first operation mode to the second operation mode when a partial load ratio of the hydronic heat pump is less than 60%, more preferably less than 50%.

5. The method according to any one of the preceding claims, **characterized in that** the heating system is switched from the first operation mode to the second operation mode when

i) a correlation between a partial load factor of the hydronic heat pump and a partial load ratio of the hydronic heat pump is greater than 1; and/or
ii) the hydronic heat pump is operating in a region of its partial load efficiency curve which lies before an inflection point of said partial load efficiency curve, preferably when the hydronic heat pump is operating with

$$\delta PLF / \delta PLR > 1$$

wherein

PLF: partial load factor of the hydronic heat pump, and
PLR: partial load ratio of the heat pump.

6. The method according to any one of the preceding claims, **characterized in that** the second deadband is set broader than the first deadband by the controller when the following condition is met:

$$[(Q \cdot (T_{indoor,SP} - T_{amb})) : (Q_{nom,HP} \cdot \Delta T)] \leq \alpha_{PLR, min}$$

wherein

Q: heat input by heat pump or other sources,
$T_{indoor,SP}$: indoor temperature setpoint of the space,
$T_{amb}$: ambient outdoor temperature,
$Q_{nom,HP}$: nominal heat capacity of the heat pump,
$\Delta T$: difference of indoor space temperature and ambient outdoor temperature,
$\alpha_{PLR, min}$: minimum threshold value for a ratio of the heat capacity.

7. The method according to any one of the preceding claims, **characterized in that** the heating system is switched from

i) the first operation mode to the second operation mode when a demand for heating the space is reduced; and/or
ii) the second operation mode to the first operation mode when demand for heating the space is increased.

8. The method according to any one of the preceding claims, **characterized in that** the heating system is switched from

i) the first operation mode to the second operation mode when a number of occupants in the space to be heated is equal to or below a threshold number of occupants, wherein the threshold number is preferably 0; and/or
ii) the second operation mode to the first operation mode when a number of occupants in the space to be heated is above a threshold number of occupants, wherein the threshold number is preferably 0.

9. A heating system, comprising

a hydronic heat pump; and
a controller;
wherein the controller is configured to set a first flow temperature and a first deadband to define a first operation mode of the heating system, wherein the first flow temperature and the first deadband are suitable for heating a space to a target temperature set within the first deadband, wherein the first deadband is defined by a first lower limit being a temperature less than or equal to a target temperature and a first upper limit being a temperature greater than or equal to the target temperature;
wherein the controller is configured to set a second flow temperature and a second deadband to define a second operation mode of the heating system, wherein the second flow temperature and the second deadband are suitable for heating a space to a target temperature set within the second deadband, wherein the second deadband is defined by a second lower limit being a temperature less than or equal to a target temperature and a second upper limit being a temperature greater than or equal to the target temperature;
wherein the controller is configured to switch the heating system from the first operation mode to the second operation mode and from the second operation mode to the first operation mode,
**characterized in that** the controller is configured to set
the second flow temperature of the second operation mode higher than the first flow temperature of the first operation mode, and
the second deadband broader than the first deadband.

10. The heating system according to claim 9, **characterized in that** the controller is configured to, for setting the second deadband broader than the first deadband,

i) set the lower limit of the second deadband of the second operation mode lower than the lower limit of the first deadband of the first operation mode by a first predetermined value, wherein the first predetermined value is preferably not higher than a value which is defined by a preferred occupant thermal comfort level, wherein said value is more preferably >0 K to ≤3 K; and/or
ii) set the upper limit of the second deadband of the second operation mode higher than the upper limit of the first deadband of the first operation mode by a second predetermined value, wherein the second predetermined value is preferably not higher than a value which is defined by a preferred occupant thermal comfort level, wherein said value is more preferably >0 K to ≤3 K;

wherein the first and second predetermined value are optionally identical or different.

11. The heating system according to any one of claims 9 or 10, **characterized in that** the controller is configured to set the second flow temperature based on a heat demand of the space, wherein the controller is preferably configured to set the second flow temperature by using the following equation:

$$T_{w,sp2} = T_{w,sp1} + [(Q_{nom,HP} - Q_{demand}) : (Q_{HP} : (T_{w,avg} - T_{indoor}))]$$

wherein

$T_{w,sp2}$: second flow temperature setpoint,
$T_{w,sp1}$: first flow temperature setpoint,
$Q_{nom,HP}$: nominal heat capacity of the heat pump,
$Q_{demand}$: heat demand of the space,
$Q_{HP}$: heating capacity of the heat pump,
$T_{w,avg}$: average flow temperature,
$T_{indoor}$: indoor temperature.

12. The heating system according to any one of claims 9 to 11, **characterized in that** the controller is configured to switch the heating system from the first operation mode to the second operation mode when a partial load ratio of the hydronic heat pump is less than 60%, more preferably less than 50%.

13. The heating system according to any one of claims 9 to 12, **characterized in that** the controller is configured to switch the heating system from the first operation mode to the second operation mode when

i) a correlation between a partial load factor of the hydronic heat pump and a partial load ratio of the hydronic heat pump is greater than 1; and/or
ii) the hydronic heat pump is operating in a region of its partial load efficiency curve which lies before an inflection point of said partial load efficiency curve, preferably when the hydronic heat pump is operating with

$$\delta PLF/\delta PLR > 1$$

wherein

PLF: partial load factor of the hydronic heat pump, and
PLR: partial load ratio of the heat pump.

14. The heating system according to any one of claims 9 to 13, **characterized in that** the controller is configured to set the second deadband broader than the first deadband when the following condition is met:

$$[(Q \cdot (T_{indoor,SP} - T_{amb})) : (Q_{nom,HP} \cdot \Delta T)] \leq \alpha_{PLR, min}$$

wherein

Q: heat input by heat pump or other sources,
$T_{indoor,SP}$: indoor temperature setpoint of the space,
$T_{amb}$: ambient outdoor temperature,
$Q_{nom,HP}$: nominal heat capacity of the heat pump,
$\Delta T$: difference of indoor space temperature and ambient outdoor temperature,
$\alpha_{PLR, min}$: minimum threshold value for a ratio of the heat capacity.

15. The heating system according to any one of claims 9 to 14, **characterized in that** the controller is configured to switch the heating system from

i) the first operation mode to the second operation mode when a demand for heating the space is reduced; and/or
ii) the second operation mode to the first operation mode when demand for heating the space is increased.

16. The heating system according to any one of claims 9 to 15, **characterized in that** the controller is configured to switch the heating system from

i) the first operation mode to the second operation mode when a number of occupants in the space to be heated is equal to or below a threshold number of occupants, wherein the threshold number is preferably 0; and/or
ii) the second operation mode to the first operation mode when a number of occupants in the space to be heated is above a threshold number of occupants, wherein the threshold number is preferably 0.

Figure 1

Figure 2

## Figure 3

Figure 4

```
┌─────────────────────────────┐
│            Start            │
└─────────────────────────────┘
               │
               ▼
┌─────────────────────────────┐
│    Online tuning to obtain   │
│  building thermal parameters │
└─────────────────────────────┘
               │
               ▼
┌─────────────────────────────┐
│    Update heat pump system   │
│     operational parameters   │
└─────────────────────────────┘
               │
               ▼
┌─────────────────────────────┐
│             Run             │
└─────────────────────────────┘
```

Figure 5

Figure 6

## Figure 7

Figure 8

Europäisches
Patentamt

European
Patent Office

Office européen
des brevets

# EUROPEAN SEARCH REPORT

**Application Number**

EP 24 16 6006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 478 084 B1 (KUMAR PAWAN [US] ET AL) 12 November 2002 (2002-11-12) * the whole document * ----- | 1-16 | INV. G05D23/19 |

**TECHNICAL FIELDS SEARCHED (IPC)**

G05D

The present search report has been drawn up for all claims

| Place of search | Date of completion of the search | Examiner |
|---|---|---|
| Munich | 31 July 2024 | Pöllmann, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...............................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 24 16 6006

This annex lists the patent family members relating to the patent documents cited in the above-mentioned European search report.
The members are as contained in the European Patent Office EDP file on
The European Patent Office is in no way liable for these particulars which are merely given for the purpose of information.

31-07-2024

| Patent document cited in search report | Publication date | Patent family member(s) | Publication date |
|---|---|---|---|
| US 6478084 B1 | 12-11-2002 | NONE | |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2023318296 A1

**Non-patent literature cited in the description**

- **BAUWENS, G.** ; **ROELS, S.** *Energy and Buildings,,* 2014, vol. 82, 163-172